# EUROPÄISCHE PATENTANMELDUNG

(11) **EP 1 211 418 A2**
(43) Veröffentlichungstag der Anmeldung: **05.06.2002**
(21) Anmeldenummer: 01124841.6
(22) Anmeldetag: 18.10.2001
(51) Int. Cl.: F04C 2/14, F04C 15/00

(54) **Vorrichtung zum Fördern von Flüssigkeiten, insbesondere Kraftstoff**

(30) Priorität: 30.11.2000 DE 10059422
(71) Anmelder: ROBERT BOSCH GMBH, 70442 Stuttgart (DE)
(72) Erfinder: Bodzak, Stanislaw, 5061 Elsbethen (AT)

(57) **Zusammenfassung**

Die Vorrichtung weist eine Antriebswelle (32) und eine Förderpumpe (30) auf, die wenigstens ein mit einer Abtriebswelle (36) gekoppeltes Förderglied (40) aufweist, wobei die Antriebswelle (32) die Abtriebswelle (36) über ein Getriebe (60) antreibt. Das Getriebe (60) ist ein Kegelringgetriebe, das ein mit der Antriebswelle (32) verbundenes Reibkegelrad (62) und ein mit der Abtriebswelle (36) verbundenes Reibkegelrad (64) aufweist, die über einen zwischen diesen angeordneten Kegelring (66) aufeinander abrollen. Der Kegelring (66) ist zur Änderung der Übersetzung des Getriebes (60) abhängig von dem durch die Förderpumpe (30) erzeugten Förderdruck derart bewegbar, daß durch diesen bei geringem Förderdruck eine große Übersetzung und mit zunehmendem Förderdruck eine kleinere Übersetzung des Getriebes (60) eingestellt wird. Hierdurch wird bei geringer Drehzahl der Förderpumpe (30), wenn diese nur einen geringen Förderdruch erzeugt, die Übersetzung des Getriebes vergrößert und entsprechend die Fördermenge und der Förderdruck erhöht.

## Beschreibung

### Stand der Technik

Die Erfindung geht aus von einer Vorrichtung zum Fördern von Flüssigkeiten, insbesondere Kraftstoff, nach der Gattung des Anspruchs 1.

Eine solche Vorrichtung ist durch die DE 196 38 332 A1 bekannt. Diese Vorrichtung weist eine Antriebswelle auf, die beispielsweise zumindest mittelbar durch eine Brennkraftmaschine rotierend angetrieben wird. Die Vorrichtung weist außerdem eine Förderpumpe auf, die wenigstens ein mit einer Abtriebswelle gekoppeltes Förderglied aufweist. Die Antriebswelle treibt die Abtriebswelle über ein Getriebe an, das beispielsweise ein Stirnradgetriebe ist und eine feste Übersetzung aufweist. Die bekannte Vorrichtung dient dazu, Kraftstoff zu einer Hochdruckpumpe zu fördern, die wiederum Kraftstoff unter Hochdruck zu Einspritzstellen an der Brennkraftmaschine fördert. Der Antrieb der Förderpumpe erfolgt mit einer Drehzahl, die proportional zur Drehzahl der Brennkraftmaschine ist. Beim Starten der Brennkraftmaschine, wenn diese nur mit geringer Drehzahl betrieben wird, wird entsprechend die Förderpumpe nur mit geringer Drehzahl angetrieben, so daß durch diese unter Umständen eine Kraftstoffmenge gefördert wird, die zu gering ist, um ein sicheres Starten der Brennkraftmaschine zu ermöglichen.

Insbesondere bei hoher Kraftstofftemperatur und geringer Drehzahl der Brennkraftmaschine, beispielsweise infolge einer nicht mehr ausreichenden Spannung einer für das Starten der Brennkraftmaschine verwendeten elektrischen Bordspannungsquelle, wird durch die Förderpumpe keine ausreichende Kraftstoffmenge gefördert. Die Übersetzung des Getriebes könnte hierbei derart modifiziert werden, daß die Förderpumpe mit höherer Drehzahl angetrieben wird oder die Förderpumpe könnte derart dimensioniert werden, daß diese eine größere Kraftstoffmenge fördert, wobei dann jedoch bei normalen Betriebsdrehzahlen der Brennkraftmaschine durch die Förderpumpe eine viel zu große Kraftstoffmenge gefördert würde, die nutzlos abgesteuert werden müßte.

### Vorteile der Erfindung

Die erfindungsgemäße Vorrichtung mit den Merkmalen gemäß Anspruch 1 hat demgegenüber den Vorteil, daß durch die Verwendung eines Kegelringgetriebes die Förderpumpe mit einer variablen Übersetzung angetrieben wird, die bei geringer Drehzahl der Antriebswelle und somit geringem Förderdruck groß ist, so daß die Förderpumpe mit höherer Drehzahl angetrieben wird, und die bei höherer Drehzahl der Antriebswelle und höherem Förderdruck geringer ist, so daß die Förderpumpe mit entprechend geringerer Drehzahl angetrieben wird. Somit wird eine Erhöhung der Fördermenge bei geringer Drehzahl der Antriebswelle erreicht, ohne daß bei höherer Drehzahl der Antriebswelle die Fördermenge proportional weiter erhöht wird.

In den abhängigen Ansprüchen sind vorteilhafte Ausgestaltungen und Weiterbildungen der erfindungsgemäßen Vorrichtung angegeben. Durch die Ausbildung gemäß Anspruch 2 wird auf einfache Weise die Verstellung des Kegelrings abhängig vom Förderdruck erreicht.

### Zeichnung

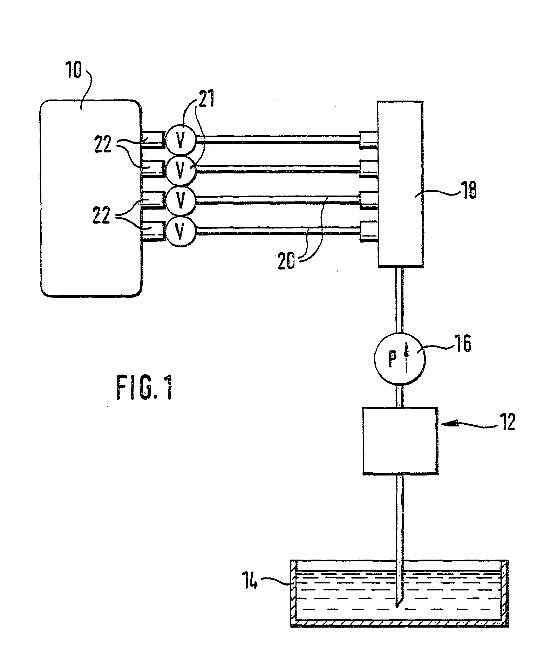

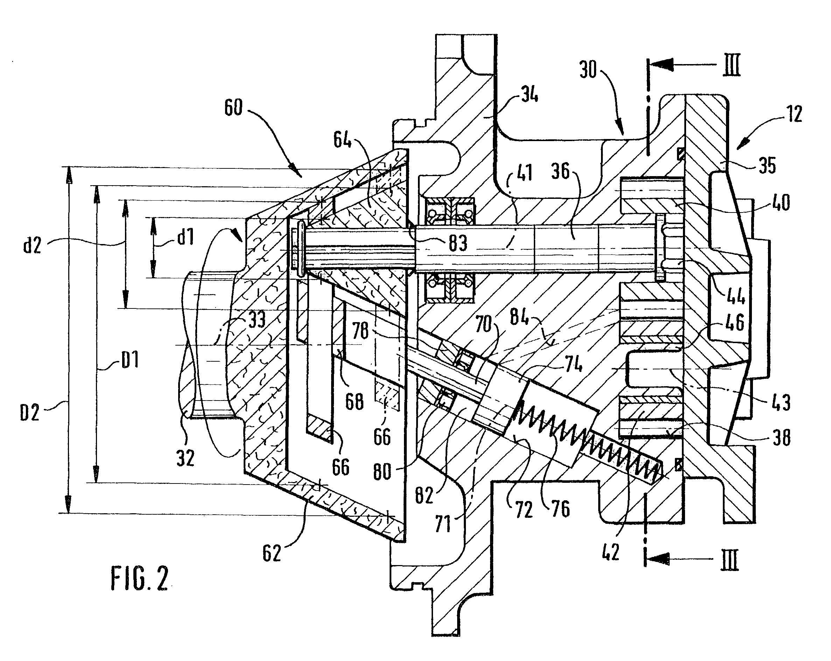

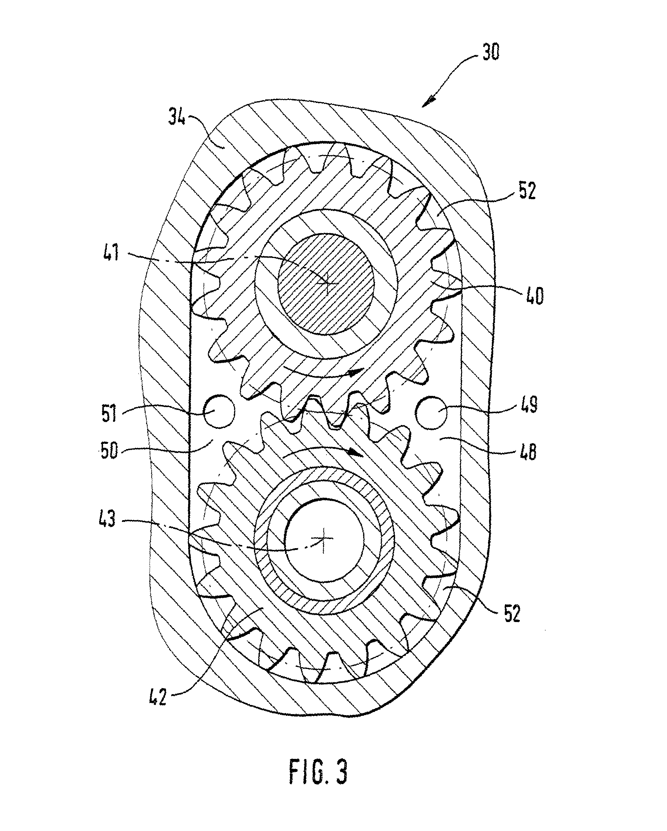

Ein Ausführungsbeispiel der Erfindung ist in der Zeichnung dargestellt und in der nachfolgenden Beschreibung näher erläutert. Es zeigen Figur 1 eine Kraftstoffversorgungseinrichtung für eine Brennkraftmaschine mit einer Vorrichtung zum Fördern von Kraftstoff, Figur 2 die Vorrichtung in einem Längsschnitt und Figur 3 die Vorrichtung in einem Querschnitt entlang Linie III-III in Figur 2.

### Beschreibung des Ausführungsbeispiels

In Figur 1 ist eine Kraftstoffversorgungseinrichtung für eine Brennkraftmaschine 10 beispielsweise eines Kraftfahrzeugs oder eine stationäre Brennkraftmaschine dargestellt, die insbesondere eine selbstzündende Brennkraftmaschine ist. Die Kraftstoffversorgungseinrichtung weist eine Vorrichtung 12 zum Fördern von Kraftstoff aus einem Vorratsbehälter 14 auf. Die Vorrichtung 12 weist eine Förderpumpe auf und wird nachfolgend noch näher erläutert. Stromabwärts nach der Vorrichtung 12 ist eine Hochdruckpumpe 16 angeordnet, deren Saugseite der von der Vorrichtung 12 geförderte Kraftstoff zugeführt wird. Stromabwärts der Hochdruckpumpe 16 ist ein Hochdruckspeicher 18 angeordnet, von dem aus Leitungen 20 zu Injektoren 22 an den Zylindern der Brennkraftmaschine 10 abführen. Durch die Injektoren 22 wird Kraftstoff in die Brennräume der Zylinder der Brennkraftmaschine 10 eingespritzt. Zur Steuerung der Einspritzung der Injektoren 22 sind Ventile 21 vorgesehen, durch die die Verbindung der Injektoren 22 mit dem Hochdruckspeicher 18 geöffnet und getrennt werden kann. Alternativ kann auch vorgesehen sein, daß anstelle der Hochdruckpumpe 16 und des Hochdruckspeichers 18 eine Kraftstoffeinspritzpumpe vorhanden ist, deren Saugseite mit der Vorrichtung 12 verbunden ist. Weiterhin alternativ kann vorgesehen sein, daß für jeden Zylinder der Brennkraftmaschine 10 eine Hochdruckpumpe oder Kraftstoffeinspritzpumpe vorhanden ist, deren Saugseite mit der Vorrichtung 12 verbunden ist, wobei der Hochdruckspeicher 18 dann entfällt.

In den Figuren 2 und 3 ist die Vorrichtung 12 im einzelnen dargestellt. Die Vorrichtung 12 weist eine Förderpumpe 30 auf, die beispielsweise eine Zahnradpumpe ist, jedoch auch als eine Innenzahnradpumpe oder als eine beliebige andere Pumpenbauart ausgeführt sein kann. Zum Antrieb der Förderpumpe 30 ist eine Antriebswelle 32 vorgesehen, die um eine Drehachse 33 rotiert und die beispielsweise auch die Antriebswelle der Hochdruckpumpe 16 sein kann oder eine andere Welle. Die Antriebswelle 32 wird zumindest mittelbar durch die Brennkraftmaschine 10 angetrieben, beispielsweise über ein Getriebe, einen Riehmen oder eine Kette. Vorzugsweise ist vorgesehen, daß die Vorrichtung 12 direkt an die Hochdruckpumpe 16 angeflanscht ist und mit dieser eine Baueinheit bildet.

Die Förderpumpe 30 weist ein Gehäuse 34 auf, in dem eine Abtriebswelle 36 drehbar gelagert ist, deren eines Ende aus dem Gehäuse 34 ragt und über ein nachfolgend noch näher erläutertes Getriebe von der Antriebswelle 32 angetrieben wird. Im Gehäuse 34 ist eine Pumpenkammer 38 gebildet, die mit einem Deckelteil 35 verschlossen ist und in der ein Paar an ihrem Außenumfang miteinander kämmender Zahnräder 40,42 angeordnet ist. Die Zahnräder 40,42 weisen Stirnverzahnungen auf, die miteinander in Eingriff stehen. Das Zahnrad 40 ist über ein Koppelelement 44 drehschlüssig mit dem in das Gehäuse 34 ragenden Ende der Abtriebswelle 36 verbunden und wird somit durch die Abtriebswelle 36 um eine Drehachse 41 rotierend angetrieben. Das Zahnrad 42 ist auf einem in die Pumpenkammer 38 ragenden Zapfen 46 um eine Drehachse 43 drehbar gelagert. Die Drehachsen 41,43 der Zahnräder 40,42 verlaufen parallel zueinander. Durch den Zahneingriff der Zahnräder 40,42 wird die Pumpenkammer 38 in eine Saugseite 48 und eine Druckseite 50 unterteilt. Auf der Saugseite 48 mündet in die Pumpenkammer 38 ein Einlaß 49, über den Kraftstoff aus dem Vorratsbehälter 14 angesaugt wird. Auf der Druckseite 50 mündet in die Pumpenkammer 38 ein Auslaß 51, durch den der geförderte Kraftstoff zu der Saugseite der Hochdruckpumpe 16 gelangt. Beim Betrieb der Förderpumpe 30 wird durch deren Zahnräder 40,42 über zwischen deren Umfängen und angrenzenden Umfangswänden der Pumpenkammer 38 gebildete Förderkanäle 52 von der Saugseite 48 zur Druckseite 50 gefördert.

Nachfolgend wird das Getriebe 60 näher erläutert, über das die Antriebswelle 32 die Abtriebswelle 36 antreibt. Das Getriebe 60 ist als Kegelringgetriebe ausgebildet und weist ein mit dem Ende der Antriebswelle 32 verbundenes Reibkegelrad 62 auf. Das Reibkegelrad 62 ist als Hohlkegelrad ausgebildet, das sich in seinem Innendurchmesser von der Antriebswelle 32 weg und zur Abtriebswelle 36 hin vergrößert. Mit dem aus dem Gehäuse 34 ragenden Ende der Abtriebswelle 36 ist ein Reibkegelrad 64 verbunden, dessen Außendurchmesser sich von der Abtriebswelle 36 weg und zur Antriebswelle 32 hin verringert. Das Reibkegelrad 64 der Abtriebswelle 36 ist innerhalb des Reibkegelrads 62 der Antriebwelle 32 angeordnet. Die Antriebswelle 32 und die Abtriebswelle 36 sind senkrecht zu ihren Drehachsen zueinander versetzt angeordnet, so daß das Reibkegelrad 64 mit seinem Außenumfang mit geringem Abstand vom Innenumfang des Reibkegelrads 62 angeordnet ist. Zwischen dem Außenumfang des Reibkegelrads 64 und dem Innenumfang des Reibkegelrads 62 ist ein Kegelring 66 angeordnet, über den die Reibkegelräder 62,64 aufeinander abrollen. Der Kegelring 66 ist sowohl an seiner Außenfläche als auch an seiner Innenfläche gleichsinnig konisch ausgebildet. Der Kegelring 66 ist zwischen dem Außenumfang des Reibkegelrads 64 und dem Innenumfang des Reibkegelrads 62 eingespannt, wobei bedingt durch die Reibung bei einer Rotation des Reibkegelrads 62 um seine Drehachse 33 das Reibkegelrad 64 ebenfalls in Rotation um seine Drehachse 41 versetzt wird. Das Reibkegelrad 64 ist mit der Abtriebswelle 36 drehschlüssig verbunden und auf dieser in axialer Richtung verschiebbar. Zwischen einem Ringbund der Abtriebswelle 36 und dem Reibkegelrad 64 ist eine vorgespannte Feder 83, die beispielsweise als Tellelfeder ausgebildet ist, angeordnet. Durch die Feder 83 wird eine axiale Verspannung zwischen dem Reibkegelrad 64, dem Reibkegelrad 62 und dem Kegelring 66 erzeugt, die die Drehmomentübertragung durch Reibung vom Reibkegelrad 62 auf das Reibkegelrad 64 über den Kegelring 66 ermöglicht. Die Drehachse 33 des Reibkegelrads 62 verläuft parallel zur Drehachse 41 des Reibkegelrads 40. Die Übersetzung des Getriebes 60 ist bestimmt durch das Verhältnis des Durchmessers des Reibkegelrads 62 zum Durchmesser des Reibkegelrads 64 in der Ebene, in der der Kegelring 66 angeordnet ist.

Der Kegelring 66 ist mit einem Verstellelement 68 gekoppelt, mittels dem der Kegelring 66 in Richtung der Drehachsen 33,41 der Reibkegelräder 62,64 bewegbar ist. Die Kopplung des Verstellelements 68 mit dem Kegelring 66 ist derart, daß der Kegelring 66 sich gegenüber dem Verstellelement 68 drehen kann, jedoch in Richtung der Drehachsen 33,41 fixiert ist. Das Verstellelement 68 ragt mit einer Stange 70 in eine im Gehäuse 34 ausgebildete Sackbohrung 72 hinein und am Ende der Stange 70 ist ein im Durchmesser größerer Kolben 74 ausgebildet, der dicht in der Sackbohrung 72 geführt ist.

Zwischen dem Grund der Sackbohrung 72 und der diesem zugewandten Stirnseite des Kolbens 74 ist eine vorgespannte Druckfeder 76 angeordnet, durch die das Verstellelement 68 aus der Sackbohrung 72 heraus gedrückt wird und entsprechend der Kegelring 66 gemäß Figur 2 nach links gedrückt wird. Die Stange 70 tritt durch eine in die Sackbohrung 72 eingesetzte Hülse 78 hindurch, wobei neben der Hülse 78 ein Dichtring 80 angeordnet ist, durch den die Stange 72 und die Sackbohrung 72 zum Getriebe 60 hin abgedichtet werden. Zwischen der Hülse 78 und der der Feder 76 abgewandten Stirnseite des Kolbens 74 ist in der Sackbohrung 72 ein Druckraum 82 begrenzt, der über eine im Gehäuse 34 verlaufende Bohrung 84 mit der Druckseite 50 der Förderpumpe 30 verbunden ist. Der Druckraum 82 ist einerseits durch den Kolben 74 und andererseits durch den Dichtring 80 abgedichtet. Das Verstellelement 68 ist mit seinem Kolben 74 in der Sackbohrung 72 und mit seiner Stange 70 in der Hülse 78 verschiebbar geführt. Der Kolben 74 des Verstellelements 68 ist somit einerseits von der Kraft der Feder 76 beaufschlagt und andererseits von einer durch den auf der Druckseite der Förderpumpe 30 herrschenden Förderdruck erzeugten Druckkraft. Durch die Druckkraft wird das Verstellelement 68 in die Sackbohrung 72 hinein gedrückt und entsprechend der Kegelring 66 gemäß Figur 2 nach rechts gedrückt. Die Längsachse 71 der Sackbohrung 72 verläuft geneigt zu den Drehachsen 33,41 der Reibkegelräder 62,64. Die Sackbohrung 72 kann alternativ jedoch auch so angeordnet sein, daß deren Längsachse 71 etwa parallel zu den Drehachsen 33,41 verläuft.

Wenn der auf der Druckseite 50 der Förderpumpe 30 vorhandene Förderdruck so gering ist, daß die durch diesen über den Kolben 74 auf das Verstellelement 68 erzeugte Druckkraft geringer ist als die durch die Feder 76 auf das Verstellelement 68 ausgeübte Kraft, so befindet sich der Kegelring 66 in seiner in Figur 2 mit durchgezogenen Linien dargestellten linken Endstellung. Das Reibkegelrad 62 weist in der Radialebene, in der der Kegelring 66 dabei angeordnet ist einen Innendurchmesser D1 auf und das Reibkegelrad 64 weist einen Außendurchmesser d1 auf. Die Übersetzung des Getriebes 60 ist somit das Verhältnis D1/d1, so daß die Drehzahl, mit der die Abtriebswelle 36 angetrieben wird die Drehzahl, mit der der Antriebswelle 32 angetrieben wird multipliziert mit D1/d1 ist. Der Durchmesser D1 kann beispielsweise etwa 40mm betragen und der Durchmesser d1 kann etwa 9mm betragen, so daß sich eine Übersetzung von etwa 4,4 ergibt. Wenn der Förderdruck auf der Druckseite 50 der Förderpumpe 30 ansteigt, so überschreitet die durch diesen über den Kolben 74 auf das Verstellelement 68 erzeugte Druckkraft die durch die Feder 76 ausgeübte Kraft, so daß das Verstellelement 68 in Richtung der Längsachse 71 in die Sackbohrung 72 hinein gedrückt wird und der Kegelring 66 gemäß Figur 2 nach rechts bewegt wird. Die Bewegungsrichtung des Verstellelements 68 ist entlang der Längsachse 71 der Sackbohrung 72. In Figur 2 ist der Kegelring 66 mit gestrichelten Linien in einer rechten Endstellung dargestellt. Bei der Bewegung des Kegelrings 66 nach rechts ändern sich die Durchmesser der Reibkegelräder 62,64, mit denen diese über den Kegelring 66 aufeinander abrollen und entsprechend die Übersetzung des Getriebes 60. In der rechten Endstellung weist das Reibkegelrad 62 in der Radialebene, in der der Kegelring 66 dabei angeordnet ist einen Innendurchmesser D2 auf und das Reibkegelrad 64 weist einen Außendurchmesser d2 auf. Die Übersetzung des Getriebes 60 ist somit das Verhältnis D2/d2, so daß die Drehzahl, mit der die Abtriebswelle 36 angetrieben wird die Drehzahl, mit der der Antriebswelle 32 angetrieben wird multipliziert mit D2/d2 ist. Da der Außenduchmesser d2 des Reibkegelrads 64 wesentlich größer ist als dessen Außendurchmesser d1 während der Innendurchmesser D2 des Reibkegelrads 62 nur wenig größer ist als dessen Innendurchmesser D1 ist die Übersetzung D2/d2 kleiner als die Übersetzung D1/d1. Der Durchmesser D2 kann beispielsweise etwa 47mm betragen und der Durchmesser d2 etwa 17mm, so daß sich eine Übersetzung von etwa 2,7 ergibt. Bei der Bewegung des Kegelrings 66 von seiner linken Endstellung in seine rechte Endstellung bei steigendem Förderdruck auf der Druckseite der Förderpumpe 30 wird somit die Übersetzung des Getriebes 60 kontinuierlich verkleinert.

Wenn die Förderpumpe 30 einen geringen Förderdruck erzeugt, was insbesondere bei geringer Drehzahl der Fall ist, so wird durch das Verstellelement 68 und den Kegelring 66 eine große Übersetzung des Getriebes 60 eingestellt, so daß die Förderpumpe 30 mit höherer Drehzahl angetrieben wird und somit ein höherer Förderdruck erzeugt wird. Mit zunehmendem Förderdruck wird durch das Verstellelement 68 und den Kegelring 66 die Übersetzung des Getriebes 60 verringert, bis sich der Kegelring 66 in seiner in Figur 2 rechten Endstellung befindet. Die Bewegung des Verstellelements 68 kann in einer oder in beiden Bewegungsrichtungen jeweils durch einen Anschlag begrenzt sein.

## Patentansprüche

1. Vorrichtung zum Fördern von Flüssigkeiten, insbesondere Kraftstoff, mit einer Antriebswelle (32) und mit einer Förderpumpe (30), die wenigstens ein mit einer Abtriebswelle (36) gekoppeltes Förderglied (40) aufweist, wobei die Antriebswelle (32) die Abtriebswelle (36) über ein Getriebe (60) antreibt, **dadurch gekennzeichnet, daß** das Getriebe (60) ein Kegelringgetriebe ist, das ein mit der Antriebswelle (32) verbundenes Reibkegelrad (62) und ein mit der Abtriebswelle (36) verbundenes Reibkegelrad (64) aufweist, die über einen zwischen diesen angeordneten Kegelring (66) aufeinander abrollen und daß der Kegelring (66) zur Änderung der Übersetzung des Getriebes (60) abhängig von dem durch die Förderpumpe (30) erzeugten Förderdruck derart bewegbar ist, daß durch diesen bei geringem Förderdruck eine große Übersetzung und mit zunehmendem Förderdruck eine kleinere Übersetzung des Getriebes (60) eingestellt wird.

2. Vorrichtung nach Anspruch 1, **dadurch gekennzeichnet, daß** der Kegelring (66) mit einem Verstellelement (68) gekoppelt ist, das vom Förderdruck beaufschlagt gegen eine Rückstellkraft bewegbar ist.

3. Vorrichtung nach Anspruch 1 oder 2, **dadurch gekennzeichnet, daß** die Übersetzung des Getriebes (60) abhängig vom Förderdruck kontinuierlich verändert wird.

4. Vorrichtung nach einem der Ansprüche 1 bis 3, **dadurch gekennzeichnet, daß** ein Reibkegelrad (62) als Hohlkegelrad ausgebildet ist, daß das andere Reibkegelrad (64) innerhalb des Hohlkegelrads (62) angeordnet ist und daß der Kegelring (66) zwischen dem Innenumfang des Hohlkegelrads (62) und dem Außenumfang des Reibkegelrads (64) angeordnet ist.

5. Vorrichtung nach einem der Ansprüche 2 bis 4, **dadurch gekennzeichnet, daß** die Bewegungsrichtung (71) des Verstellelements (68) geneigt zu den Drehachsen (33,41) der Reibkegelräder (62,64) ist.

6. Vorrichtung nach einem der vorstehenden Ansprüche, **dadurch gekennzeichnet, daß** die Drehachsen (33,41) der Reibkegelräder (62,64) zumindest annähernd parallel zueinander verlaufen.

7. Vorrichtung nach einem der vorstehenden Ansprüche, **dadurch gekennzeichnet, daß** die Förderpumpe (30) eine Zahnradpumpe ist.
